# EUROPÄISCHE PATENTANMELDUNG

(11) **EP 1 002 949 A2**
(43) Veröffentlichungstag der Anmeldung: **24.05.2000**
(21) Anmeldenummer: 99118279.1
(22) Anmeldetag: 15.09.1999
(51) Int. Cl.: F03D 3/04

(54) **Windturbine mit senkrechter Drehachse**

(30) Priorität: 21.11.1998 DE 19853790
(71) Anmelder: Groppel, Wilhelm, 49324 Melle (DE)
(72) Erfinder: Groppel, Wilhelm, 49324 Melle (DE)

(57) **Zusammenfassung**

Windkraftanlage (10) mit einem sich in horizontaler Richtung drehenden Rotor (17), der eine Vielzahl von Rotorblättern (11) aufweist, wobei die Rotorblätter (11) bereichsweise von einer Verkleidung (15) umgeben sind, wobei sich das Verkleidung (15) je nach Windrichtung (21) so ausrichtet, daß immer die der Windrichtung (21) gegenläufigen Rotorblätter (11) geschützt sind. Ferner ist die Windkraftanlage (10) zur vorzugsweise nachträglichen Befestigung an bereits vorhandenen Masten (25), vorgesehen, wobei die Vorrichtung eine ringförmigen Lagerring (12) aufweist, auf der sich der Rotor (17) auf Lagern (27) dreht, wobei sich die Lagerring (12) um den Mast (25) erstreckt und durch Verbindungsstreben (13) an dem Mast (25) befestigt ist.

## Beschreibung

Die Erfindung betrifft eine Windkraftanlage mit einem sich in horizontaler Richtung drehenden Rotor, sowie einen Rotor für diese sich horizontal drehende Windkraftanlage, der eine Vielzahl von Rotorblättern aufweist und mit einem Generator verbunden ist.

Bekannte Windkraftanlagen sind auf hohen Masten angeordnet, um ihre großen Rotoren ausreichend gegen den Wind zu richten. Die Rotoren sind hierbei vertikal ausgerichtet und drehen sich um eine horizontale Achse. Die vertikale Achse ist dabei in der Regel mit einem Generator verbunden. Durch die vertikale Anordnung können jedoch insbesondere bei ungünstigem Lichteinfall unangenehme Schattenbildungen entstehen. Weiterhin sind enorm hohe Masten notwendig, um eine ausreichende Leistung zu garantieren. Die schweren Getriebe, über die die Rotoren mit dem Generator verbunden sind, führen oftmals zu statischen Problemen der Türme. Bei starken Winden werden enorme Kräfte auf den Mast ausgeübt, die zu einem Bruch führen können.

Aus der GB 20414587 A ist ein sich um eine vertikale Achse drehendes Windrad bekannt, das bereichsweise von einem Gehäuse umgeben ist. Das Gehäuse wird durch einen windfahnenförmigen Ausrichter so in den Wind gestellt, das die dem Wind gegenläufigen Rotorblätter geschützt sind.

Aus der DE 26 20 862 ist eine Windkraftanlage bekannt, deren sich um eine horizontale Achse drehenden Rotoren durch einen Klemmrahmen um einen Mast befestigt sind. Hierbei sind, je zwei Rotoren rechts und links vom Mast befestigt und werden durch den Klemmrahmen, der drehbar um den Mast gelagert ist, gegen den Wind ausgerichtet.

Aus der DD 296 734 ist eine Windkraftanlage bekannt, die sich um eine vertikale Achse dreht, wobei das Flügelrad durch ein kreissegmentförmiges Schutzschild umgeben ist, das sich um die Achse des Flügelrades dreht.

Aus der DE 196 15 943 ist eine Solaranlage bekannt, die je nach Bedarf aus einer Vielzahl von genormten Modulen aufgebaut werden kann, wobei die Module sowohl herkömmliche Solarmodule als auch herkömmliche Windkraftanlagen sind, die sich um eine horizontale Achse drehen.

Aus der DE 38 29 112 ist eine Windkraftanlage mit einem mit Schaufeln bestücktem Rotor bekannt, der mit einem Generator verbunden ist, und der durch eine Gehäuse gekapselt ist, das sich frei in die gewünschte Windrichtung ausrichten läßt. Hierbei weist das Gehäuse einen trichterförmigen Einlaß auf, der mit Luftleitblechen versehen ist. Durch einen Luftauslaß, der kleiner gestaltet ist, soll die Luft beschleunigt werden. Der Einströmtrichter wird gegen den Wind ausgerichtet.

Aus der DE 196 48 632 ist eine radförmige Windkraftanlage bekannt, dessen Rotor eine Vielzahl von wannenförmigen Rotorblättern aufweist, wobei das Windrad von einem Gehäuse umgeben ist, das so aufgebaut ist wie das Gehäuse des Windrades, das aus der Druckschrift DE 38 29 112 bekannt ist.

Aufgabe der vorliegenden Erfindung ist es, eine Windkraftanlage bereitzustellen, die einen hohen Wirkungsgrad aufweist und die einfach zu installieren ist, sowie mit bereits bestehenden Windkraftanlagen kombiniert werden kann. Ferner soll es möglich sein, die Anlage je nach Bedarf auszubauen, ohne große technische und finanzielle Aufwendungen zu treffen. Eine weitere Aufgabe besteht in der einfachen Befestigung der Vorrichtung an bereits bestehenden Türmen. Noch eine weitere Aufgabe besteht darin, die unangenehme Schattenbildung der herkömmlichen Windräder zu vermeiden. Noch eine weitere Aufgabe besteht darin, für diese Vorrichtung einen sich in der horizontalen drehenden Rotor bereitzustellen, der optimale aerodynamische Eigenschaften aufweist um den Luftwiderstand der zurückströmenden Luft zu minimieren.

Gelöst wird diese Aufgabe, durch die Merkmale der Ansprüche 1, 3, 9 und 20, insbesondere durch einen Rotor für eine sich horizontal drehende Windkraftanlage, der eine Vielzahl von Rotorblättern aufweist und mit einem Generator verbunden ist, wobei die Rotorblätter bereichsweise von einer Verkleidung umgeben sind, wobei die Verkleidung je nach Windrichtung durch Ausrichtmittel so ausrichtet wird, daß immer die der Windrichtung gegenläufigen Rotorblätter geschützt sind.

Um eine hohe Effektivität sicher zu stellen, umgibt und schützt die Verkleidung zumindest die Hälfte der Rotorblätter.

In einer weiteren erfindungsgemäßen Ausgestaltung des Rotors sind die Rotorblätter von einer Verkleidung vollständig umgeben, wobei die Verkleidung einen Lufteinlaß und einen Luftauslaß aufweist, und die Verkleidung je nach Windrichtung durch Ausrichtmittel, so ausgerichtet wird, daß der Lufteinlaß optimal gegen die Windrichtung ausgerichtet wird.

Hierzu ist die Verkleidung drehbar gelagert und wird durch einen windfahnenförmigen Verkleidungausrichter ausgerichtet.

In einer weiteren Ausführungsform wird die Verkleidung durch einen Stellmotor ausgerichtet, der von einem Windsensor angesteuert wird.

Um bereits bestehende Windkraftanlage sinnvoll zu erweitern, weist die Windkraftanlage Mittel zur nachträglichen Befestigung an bereits vorhandenen Masten auf. Diese Windkraftanlage besteht aus einem sich in horizontaler Richtung drehenden ringförmigen Rotor, der eine Vielzahl von Rotorblättern aufweist. Ferner beinhaltet die Windkraftanlage einen ringförmigen Lagerring, auf der sich der Rotor auf Lagern dreht, wobei sich der Lagerring um den Mast erstreckt und die Lager durch Verbindungsstreben an dem Mast befestigt sind. Eine Umkehrung diese Prinzip ist ebenfalls denkbar, so daß der Lagerring statisch ist und der Rotor mit Lagern verbunden sind, die auf dem Lagerring laufen.

Die Verbindungsstreben sind so ausgelegt, daß sie an unterschiedlich starken Masten variable befestigt werden können, ohne dabei erhebliche konstruktive Veränderungen vornehmen zu müssen. Über ein Getriebe ist der Rotor mit einem Generator verbunden. Der Rotor ist an seiner zum Mast gerichteten Innenseite zahnradförmig ausgebildet, wobei in dieses erste Zahnrad ein zweites Zahnrad greift, das über eine Getriebewelle mit dem Generator verbunden ist.

In einer weiteren Ausführung erfolgt die Kraftübertragung durch einen Reibantrieb, der über einen Riemen und ggfs. ein Getriebe die Kraft an den Generator überträgt.

Durch die ringförmige Ausgestaltung ist eine Befestigung an bereits bestehenden Masten oder zu installierenden Windkraftanlage ohne weiteres möglich. Insbesondere können eine Vielzahl der beschriebenen Windkraftanlagen an einem Masten übereinander befestigt werden. Auch eine gemeinsame Nutzung des Transformators bzw. der Umspannvorrichtung ist denkbar. Die Segmentierung des Rotors und des Lagerrings erlaubt eine nachträgliche Montage.

Weiter vorteilhafte Ausführungsformen sind in den Unteransprüchen aufgeführt. Es folgt eine detaillierte Beschreibung anhand der Zeichnungen. Es zeigt:
- **Figur 1**: eine herkömmliche Windkraftanlage mit einem sich vertikal um eine horizontale Achse drehenden Rotor, an deren Mast mehrere erfindungsgemäße Windkraftanlagen befestigt sind, die sich horizontal drehen und deren vollständige Verkleidung einen Lufteinlaß aufweist;
- **Figur 2**: zeigt eine Seitenansicht der in Figur 1 dargestellten Windkraftanlagen, wobei die Verkleidung durch einen windgesteuerten Gehäuseausrichter ausgerichtet wird;
- **Figur 3**: eine Draufsicht auf eine erfindungsgemäße Windkraftanlage, mit einem ringförmigen Rotor, der eine Vielzahl von Rotorblättern aufweist, wobei die Hälfte des Rotors und der Blätter von einer Verkleidung umgeben wird, die durch einen windgesteuerten Verkleidungausrichter ausgerichtet wird;
- **Figur 4**: eine schematische Seitenansicht der erfindungsgemäßen Vorrichtung, die um einen Mast angeordnet ist, wobei der Rotor auf einem L-förmigen Lagerring angeordnet ist, der sich auf in einem Winkel von 45° angeordneten Lagern dreht, wobei der Rotor über ein Reibradantrieb, mit einem Generator verbunden ist;
- **Figur 5**: eine schematische Draufsicht auf einen erfindungsgemäßen Rotor, der vollständig von einer Verkleidung umgeben ist, wobei die Verkleidung einen trichterförmigen Lufteinlaß aufweist, der mit Luftleitblechen versehen ist, und mit einem Luftauslaß, der mit Hilfe der Formgebung der Verkleidung so angeordnet ist, daß ein Venturi-Effekt entsteht.
- **Figur 6**: eine Detailansicht des Reibradantriebes, der ein Reibrad und ein Spannrad aufweist, die an einen Schenkel des L-förmig ausgebildeten Lagerrings anliegen, wobei die Energie durch einen Riemen auf den Generator übertragen wird;
- **Figur 7**: zeigt einen Schnitt entlang der Seitenansicht der Figur 6, mit dem Generator, dem Reibrad, dem Spannrad, dem L-förmigen Lagerring, auf dem der Rotor angeordnet ist;
- **Figur 8**: zeigt im Detail den Schnitt entlang der Seitenansicht der Lagerung des Rotors, der auf ein L-förmigen Lagerring befestigt ist, wobei ein Lager, das in Form eines Lagerrades ausgebildet ist, im Winkel von 45° an einem stationären Rahmen befestigt ist;
- **Figur 9**: zeigt die schematische Seitenansicht einer mögliche Lagerung der Verkleidung liegend auf dem Rotor, mit einem L-förmigen Lagerring, dessen Schenkel von zwei Lagern geführt werden.

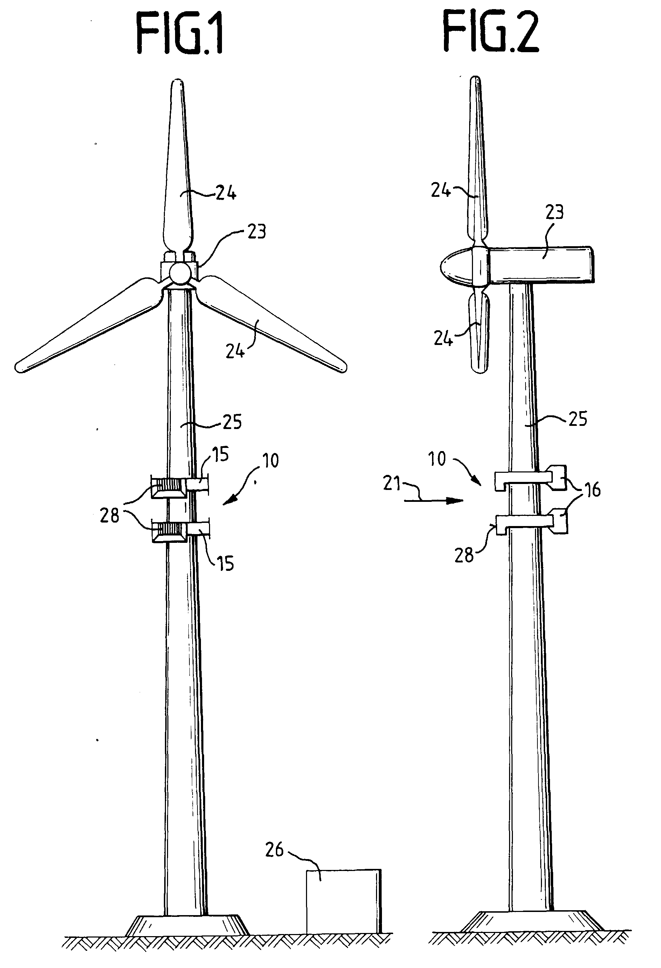

Die Figur 1 zeigt eine Windkraftanlage 23, an deren Mast 25 mehrere erfindungsgemäße Windkraftanlagen 10 befestigt sind. Die erfindungsgemäßen Windkraftanlagen 10 sind dabei horizontal übereinander angeordnet. Die erfindungsgemäßen Windkraftanlagen 10 sind vorzugsweise unterhalb des sich vertikal drehenden Rotors 24 befestigt, um Windturbulenzen zu vermeiden.

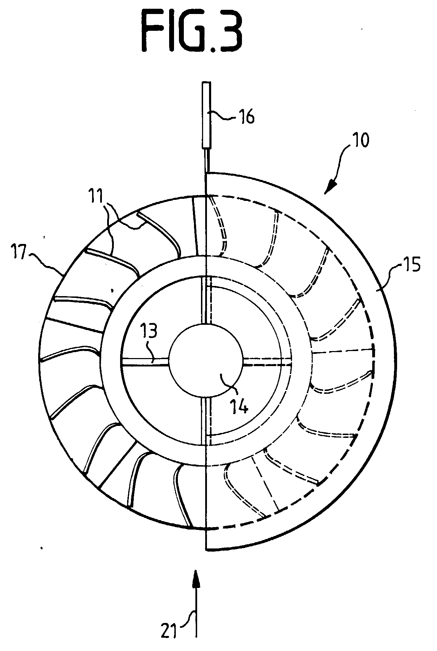

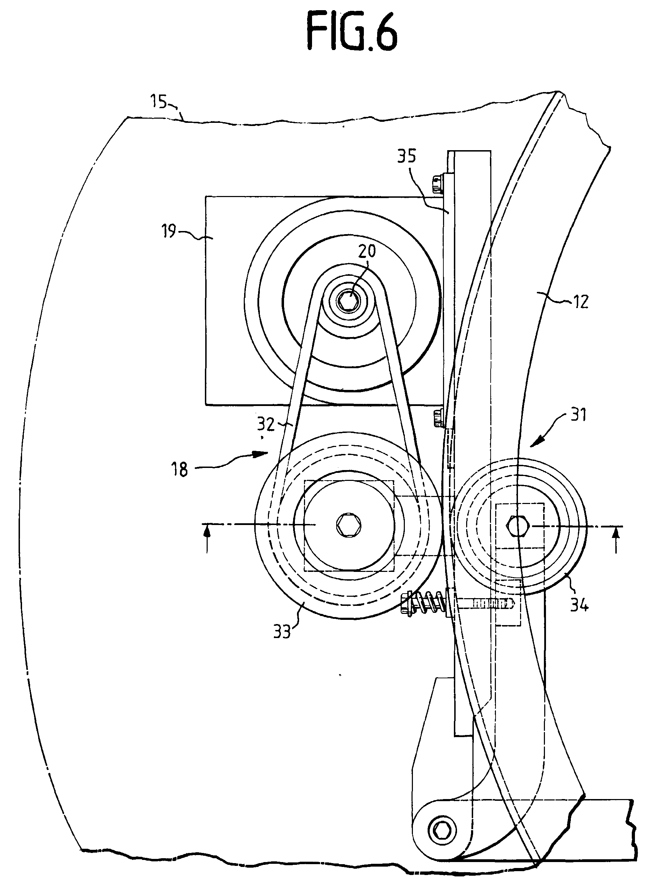

Die erfindungsgemäßen Windkraftanlagen bestehen aus einem ringförmigen Rotor 17, wie er den Figuren 3 und 5 entnehmbar ist, der sich geschützt durch eine Verkleidung um den Mast 25 dreht. Der Figur 1 ist zu entnehmen, daß die Verkleidung einen trichterförmigen Lufteinlaß aufweist, der gegen den Wind gerichtet wird. Der durch die Windkraftanlagen erzeugte Strom wird in einem Transformator 26, der regelmäßig auf dem Boden angeordnet ist, auf die benötigte Spannung und Frequenz umgewandelt.

Figur 2 stellt in einer Seitenansicht die Vorrichtung der Figur 1 dar. Durch diese Ansicht wird ein Verkleidungsausrichtung 16 sichtbar, der windgesteuert wie eine Fahne die Verkleidung 15 ausrichtet.

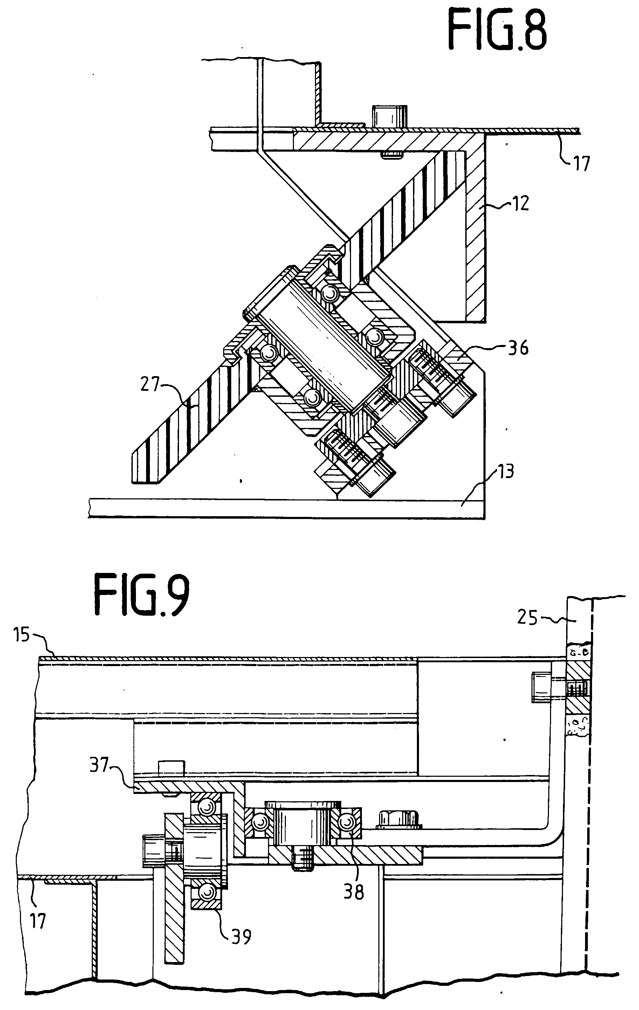

Figur 3 ist ein detaillierte Aufbau der Windkraftanlage 10 zu entnehmen. Diese weist den Rotor 17 auf, der ringförmig ausgebildet ist, damit er um den Mast 25 rotieren kann. An der Außenseite des Rotors 17 sind Rotorblätter 11 befestigt, die vorzugsweise löffelförmig ausgebildet sind. Andere Formen sind aber ebenfalls denkbar. Die Hälfte des Rotors 17 ist von der Verkleidung 15 umgeben, die vorzugsweise einen U-förmig Querschnitt aufweist. Die Verkleidung 15 ist ebenfalls drehbar gelagert und richtet sich je nach Windrichtung 21 so aus, daß die dem Wind gegenläufigen Rotorblätter 11 geschützt sind. Eine mögliche Lagerung der Verkleidung ist der Figur 9 zu entnehmen. Die Verkleidung 21 wird vorzugsweise durch einen entsprechend groß dimensionierten Verkleidungausrichter 16, der wie eine Fahne wirkt, ausgerichtet. Der Verkleidungausrichter 16 ist vorzugsweise an der hinteren Kante und der dem Wind abgewandten Seite der Verkleidung 15 befestigt.

In einer alternativen Ausführungsform wird die Verkleidung 15 über einen - nicht dargestellten - Stellmotor ausgerichtet, der von einem - nicht dargestellten - Windrichtungssensor gesteuert wird.

Der Figur 5 ist eine weitere Möglichkeit der Ausbildung der Verkleidung 15 zu entnehmen. Hierbei wird der Rotor 17 nahezu vollständig von der Verkleidung umgeben. Die Verkleidung weist lediglich einen Lufteinlaß 28 auf, der durch die genannten Mittel immer gegen den Wind ausgerichtet wird, und der so angeordnet ist, daß der Wind direkt in die Rotorblätter 11 des Rotors 17 greift. Ferner weist die Verkleidung einen Luftauslaß 29 auf. Die Verkleidung 15 schafft somit einen pumpenbzw. turbinenförmigen Aufbau der Vorrichtung 10. Der Lufteinlaß 28 ist vorzugsweise trichterförmig ausgebildet und weist Luftlenkbleche 30 auf, die den Wind in möglichst optimaler weise auf die Rotorblätter 11 ablenken. Je nach Anordnung des Trichters sollte der Wind hierbei in Rotationsrichtung umgeleitet werden. Falls der Trichter wie im vorliegenden Fall seitlich angeordnet ist, so verändert sich der Stellwinkel der Luftlenkbleche 30 je näher sie an der Mitte des Rotors 17 angeordnet sind.

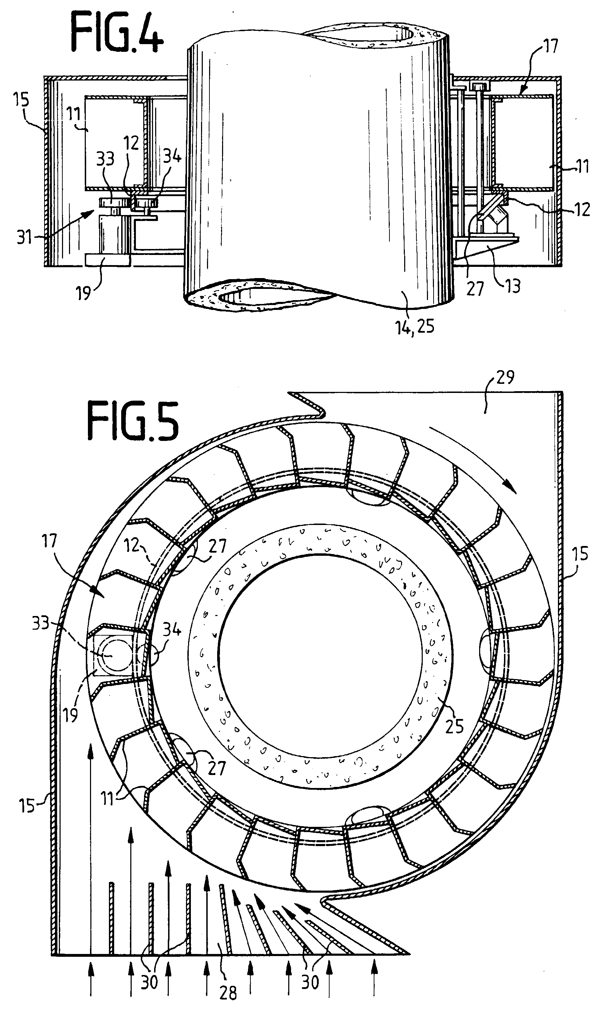

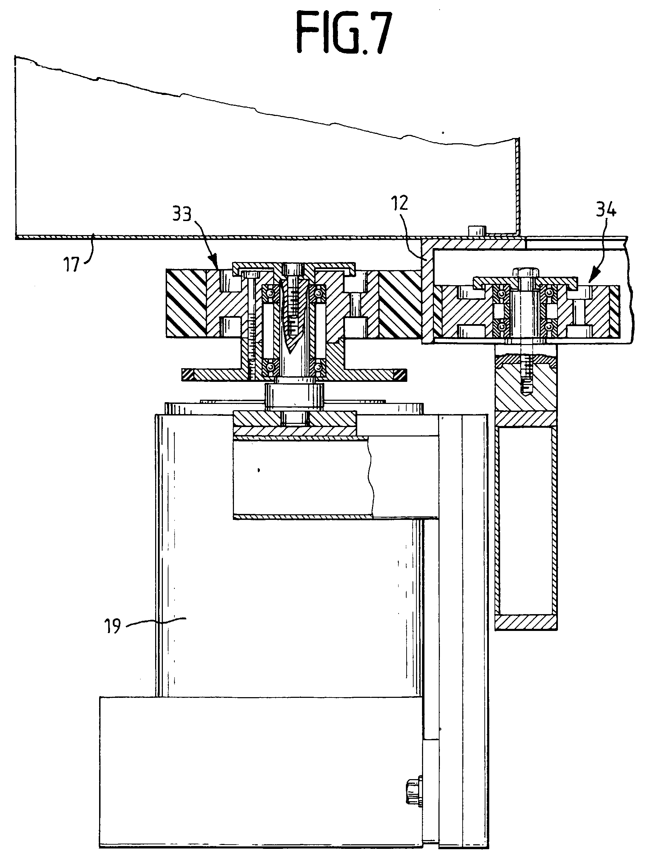

Ferner ist der Figur 3 die Lagerung zu entnehmen, die in der Figur 4 und Figur 7 noch detaillierter beschrieben wird. Das Lager besteht aus einem L-förmigen Lagering 12 auf dem der Rotor 17 befestigt ist. Zwischen den Schenkeln des Lagerrings 12 sind Lager 27 angeordnet, die in Form von Laufrädern in einem schrägen Winkel zwischen den Schenkeln angeordnet sind.

Ferner ist der Figur die Anordnung eines Generators 19 zu entnehmen, der ohne Getriebe, direkt über einen Reibradantrieb 31 mit dem Rotor 17 verbunden ist.

Wie Figur 4 zu entnehmen ist, ist der Rotor 17 auf einem L-förmigen Lagerring 12 befestigt, der sich um den Mast 25 erstreckt. In gleichwinkligen Abstand erstrecken sich radial um den Mast 25 Lager 27, die auf Verbindungsstreben 13 angeordnet sind. Die Lager 27 sind dabei vorzugsweise in einem Winkel von 45° angeordnet und erstrecken sich mit ihrer äußeren Lauffläche in den Winkel, der durch die Scheitel des Lagerrings 12 gebildet wird. Dabei ist das Lager 27 vorzugsweise als Laufrad ausgebildet.

Die Verbindungsstreben 13 sind mit ihrer dem Lager 27 entgegengesetzten Seite mit dem Mast 25 verbunden.

Der Figur 4 ist ferner die Anordnung des Generators 19 zu entnehmen. Dieser ist vorzugsweise hängend unter dem Rotor 17 angeordnet. Der Rotor 17 ist über den L-förmigen Lagerring durch einen Reibradantrieb 31, der detaillierter in Figur 6 dargestellt ist, mit dem Generator 19 verbunden. Eine Getriebewelle 20 des Generators 19 ist entweder direkt oder über ein Getriebe 18 mit einem Reibrad 33 verbunden. Das Reibrad 33 wird durch ein Spannrad 34 gegen den vorzugsweise den vertikalen Schenkel der L-förmigen Lagerrings 12 gepreßt. Der Generator 19 ist ebenfalls durch eine Verbindungsstrebe 13 mit dem Mast 25 verbunden. Je nach Geschwindigkeit des Rotors 17 kann das Reibrad angelegt werden oder nicht. So kann der Rotor 17 leichten zu rotieren beginnen, ohne Kontakt mit dem Generator 19 zu haben.

Figur 6 ist der detaillierte Aufbau des Reibradantriebes 31 zu entnehmen. Hierbei ist der Generator 19 das Reibrad 33 und das Spannrad 34 auf einem Rahmen 35 angeordnet, der wiederum über eine Verbindungstrebe 13 mit dem Mast 25 verbunden ist. Das Reibrad 33 ist über einen Riemen 32 mit der Getriebewelle 20 des Generators 19 verbunden. Hierdurch können bestimmte Übersetzungsverhältnisse vorbestimmt werden. Das Reibrad 33 wird durch Federkraft gegen den vertikalen Schenkel der L-förmigen Lagerrings 12 gepreßt. Um einen entsprechenden Reibungsrad zu haben wird das Spannrad 34 auf der gegenüberliegenden Seite des Schenkels mit Hilfe einer Feder gegen das Reibrad 33 gedrückt. Somit wird auf den Schenkel ein beidseitiger Druck ausgeübt, der ein Kraftübertragung ohne Reibungsverluste ermöglicht.

Andere Formen von Getrieben sind ebenfalls denkbar. So könnten bekannte automatische Getriebe Verwendung finden, die den Generator immer auf einer optimalen Umdrehungszahl halten. Die Steuerung dieser Getriebe erfolgt in Abhängigkeit von der Umdrehung des Rotors.

In Figur 7 wird der Antrieb in der Seitenansicht dargestellt. In dieser besonderen Form ist der Generator 19 direkt über seine Getriebewelle 20 mit dem Reibrad verbunden. Auf der dem Schenkel des L-förmigen Lagerrings 12 gegenüberliegenden Seite ist das Spannrad 34 so angeordnet, daß Druck von beiden Seiten eines Schenkels auf den vertikal verlaufenden Schenkel ausgeübt wird. Die Reibräder sind vorzugsweise Kugel gelagert.

In einer weiteren nicht dargestellten Ausführungsform ist der Lagerring in seiner Innenseite Zahnradförmig ausgebildet, um ein zweites Zahnrad anzutreiben. Das zweite Zahnrad ist z.B. über eine Getriebewelle 20 mit dem Generator 19 verbunden.

Weiter Formen der Kraftübertragung sind denkbar. So könnte eine Übertragung mit Hilfe von Riehmen, Scheiben, Rutschkupplungen oder anderen bekannten Kraftübertragungsmitteln erfolgen.

Ebenfalls könnte der Generator 19 direkt im Rotor 17 integriert sein, so daß der Rotor 17 und die Lagerring 12 im Zusammenspiel die Wirkung eines Generators haben.

Figur 8 ist eine Detailansicht der Lagerung. Hierbei ist das Lager 27 als Rad ausgeformt, dessen Achse in einem Winkel von 45° angeordnet ist. Das Rad ist auf zwei Kugellagern gelagert, die in einem Gehäuse angeordnet sind, das auf einem Rahmen 36 befestigt ist. Der Rahmen 36 ist wiederum mit einer Verbindungsstrebe 13 verbunden. Die Lauffläche des Rades ist vorzugsweise verlaufend ausgebildet, so daß die Lauffächen in den von den Schenkeln des L-förmigen Lagerrings gebildeten Winkel paßgenau anliegen.

Figur 9 zeigt die Lagerung der Verkleidung 15 auf dem Rotor 17. Hierbei sind zwei Kugellager 38, 39 in einem Winkel von 90° zueinander angeordnet, wobei sie jeweils an den Schenkel eines ebenfalls L-förmigen Lagerrings 37 anliegen. Die Lager 38, 39 sind auf der Verkleidung 15 befestigt. Diese Art der Lagerung ist mehrfach auf dem Rotor 17 auf der Umlaufbahn des Lagerings 37 angeordnet, der mit der Verkleidung 15 verbunden ist.

Eine andere Lagerung z.B. direkt am Mast ohne Kontakt zum Rotor über weitere Verbindungsstreben entsprechend der Lagerung des Rotors ist ebenfalls denkbar. Hierdurch könnte die Reibung des Rotors gering gehalten werden.

Auch kann das Gehäuse gestützt gelagert werden wie es aus Figur 4 entnommen werden kann.

Auch andere Formen der Lagerung sind vorstellbar. So könnte eine Luft- oder Flüssigkeitslagerung die Reibung des Rotors enorm verringern und zu einer erhöhten Energieausnutzung führen. Hierbei wird durch bekannte Mittel ein Luft- bzw. ein Flüssigkeitskissen unter dem Rotor aufgebaut, auf dem der Rotor gleitet. Auch eine magnetische Lagerung ist denkbar. So ist das Lager durch zwei entgegengesetzt ausgerichtete Magneten realisiert

Zur nachträglichen Befestigung der Windkraftanlage 10 sind sowohl der Rotor 17 als auch die Lagerring 12 teilbar, damit sie um einen bestehenden Masten 25 geführt werden können. Die Teilung erfolgt vorzugsweise in gleich großen Segmenten.

Ein weitreichender Einsatz der Windkraftanlage 10 unter Berücksichtigung von unterschiedlichen Maststärken wird durch variable Verbindungsstreben 13 erreicht. Die Verbindungsstreben 13 verbinden die Lager 27 mit dem Mast 25. Sie können unterschiedliche Längen haben, um den differierenden Maststärken Rechnung zu tragen.

Die nachträglich befestigten Windkraftanlage können einen bereits vorhandenen Transformator 26 nutzen, um die gewonnene Energie in das öffentliche Netz zu speisen.

### Bezugszeichen

- 10: Windkraftanlage
- 11: Rotorblatt
- 12: Lagerring
- 13: Verbindungsstreben
- 15: Verkleidung
- 16: Verkleidungausrichter
- 17: Rotor
- 18: Getriebe
- 19: Generator
- 20: Getriebewelle des Generators
- 21: Windrichtung
- 23: Bestehende Windkraftanlagen
- 24: Rotor, vertikal drehend
- 25: Mast
- 26: Transformator
- 27: Lager
- 28: Lufteinlaß
- 29: Luftauslaß
- 30: Luftlenkbleche
- 31: Reibradantrieb
- 32: Riemen
- 33: Reibrad
- 34: Spannrad
- 35: Rahmen, des Reibradantriebes
- 36: Rahmen, des Lager
- 37: Lagerring
- 38: Lager, horizontal
- 39: Lager, vertikal

## Patentansprüche

1. Windkraftanlage zur vorzugsweise nachträglichen Befestigung an Masten (25),
- mit einem sich in horizontaler Richtung um den Masten (25) beabstandet drehenden ringförmigen Rotor (17), der eine Vielzahl von Rotorblättern (11) aufweist,
- mit einem ringförmigen Lager (12, 22), durch das der Rotor (17) drehbar gelagert ist, wobei das Lager aus einem Lagering (12) und aus Lagermitteln (27) besteht, und entweder der Lagerring (12) und/oder die Lagermittel (27) beabstandet und justierbar durch Verbindungsmittel (13) am Mast (25) befestigt sind,
- mit einem Generator (19), der mit dem Rotor (17) verbunden ist.

2. Windkraftanlage nach Anspruch 1, dadurch gekennzeichnet, daß die Verbindungsmittel Verbindungsstreben (13) sind und die Verbindungsstreben (13) so ausgelegt sind, daß sie an unterschiedlich starken Masten (25) variable befestigbar sind.

3. Windkraftanlage nach Anspruch 1, dadurch gekennzeichnet, daß die sich ringförmig um den Masten (25) erstreckenden Bauteile (12, 17) aus zusammenfügbaren Segmenten bestehen.

4. Windkraftanlage nach Anspruch 1, dadurch gekennzeichnet, die Rotorblätter (11) bereichsweise von einer ringsegmentförmigen Verkleidung (15) umgeben sind, wobei die Verkleidung (15) je nach Windrichtung (21) durch Ausrichtmittel so ausrichtet wird, daß immer die der Windrichtung (21) gegenläufigen Rotorblätter (11) geschützt sind.

5. Windkraftanlage nach Anspruch 4, dadurch gekennzeichnet,, dadurch gekennzeichnet, daß das Verkleidung (15) vorzugsweise zumindest die Hälfte der Rotorblätter (11) schützend umgibt.

6. Windkraftanlage nach Anspruch 1, dadurch gekennzeichnet, die Rotorblätter (11) von einer ringförmigen Verkleidung (15) umgeben sind, die Verkleidung (15) einen Lufteinlaß (28) und einen Luftauslaß (29) auf weist, wobei die Verkleidung (15) je nach Windrichtung (21) durch Ausrichtmittel, so ausgerichtet wird, daß der Lufteinlaß(21) optimal gegen die Windrichtung (21) gerichtet ist.

7. Windkraftanlage nach Anspruch 6, dadurch gekennzeichnet, daß der Lufteinlaß (28) trichterförmig ausgebildet ist, so daß durch entsprechend kleinere Dimensionierung des Luftauslaßes (29) möglichst ein Venturi-Effekt beim Durchströmen der Luft durch die Verkleidung (15) entsteht, der zu einer höheren Rotationsgeschwindigkeit des Rotors 17 führt.

8. Windkraftanlage nach Anspruch 7, dadurch gekennzeichnet, daß der Lufteinlaß (28) mindestens ein Luftlenkbleche (30) aufweist, das die Luft optimal gegen die Rotorblätter (11) leitet.

9. Windkraftanlage nach Anspruch 1, dadurch gekennzeichnet, dadurch gekennzeichnet, daß die Verkleidung (15) drehbar gelagert ist und die Ausrichtmittel ein windfahnenförmigen Verkleidungausrichter (16) oder ein durch einen Windsensor gesteuerter Stellmotor sind, die die Verkleidung (15) ausrichten.

10. Windkraftanlage nach Anspruch 1, dadurch gekennzeichnet, dadurch gekennzeichnet, daß die Verkleidung (15) und/oder der Verkleidungausrichter (16) und/oder der Rotor (17) aus Verbundkunststoffen und/oder Leichtmetallen gefertigt sind.

11. Windkraftanlage nach Anspruch 1, dadurch gekennzeichnet,, dadurch gekennzeichnet, daß die Rotorblätter löffelförmig oder schaufelförmig ausgebildet sind.

12. Windkraftanlage nach Anspruch 1, dadurch gekennzeichnet, daß das Kraftübertragungsmittel ein Reibradantrieb ist, der mit dem Rotor (17) in Reibverbindung steht, und der über einen Riemen, eine Kette oder direkt mit dem Generator (19) verbunden ist.

13. Windkraftanlage nach Anspruch 1, dadurch gekennzeichnet, daß der Rotor (17) an seiner zum Mast (25) gerichteten Innenseite zahnradförmig ausgebildet ist, wobei in dieses erste Zahnrad ein zweites Zahnrad greift, das über eine Getriebewelle (20) mit dem Generator (19) verbunden ist.

14. Windkraftanlage nach Anspruch 1, dadurch gekennzeichnet, daß ein Getriebe (18) zwischen Rotor (17) und Generator (19) geschaltet ist.

15. Windkraftanlage nach Anspruch 1, dadurch gekennzeichnet, daß das Getriebe (18) in Abhängigkeit von der Geschwindigkeit des Rotors (17) automatisch zwischen unterschiedlichen Übersetzungen wechseln kann.

16. Windkraftanlage nach Anspruch 1, dadurch gekennzeichnet, daß das Lager aus einem Lagerring 12 besteht, der einen L-förmigen Querschnitt aufweist, wobei ein Lager (27) so zwischen den Schenkeln des Lagerrings (12) angeordnet ist, daß der äußere Rand des Lagers (27) im Schnittpunkt der Schenkel des Lagerrings aufliegt.

17. Windkraftanlage nach Anspruch 1, dadurch gekennzeichnet, daß das Lager eine reibungsarme Luftkissenlagerung ist.

18. Windkraftanlage nach Anspruch 1, dadurch gekennzeichnet, daß das Lager eine reibungsarme Flüssigkeitslagerung ist.

19. Windkraftanlage nach Anspruch 1, dadurch gekennzeichnet, daß das Lager eine reibungsarme Magnetlagerung ist.

20. Verwendung der Windkraftanlage, die durch die Mermale des Anspruchs 1 bestimmt ist, **dadurch gekennzeichnet**, daß die Windkraftanlage an einem Masten (25) einer bereits bestehenden oder zu installierenden Windkraftanlage (23) befestigt wird, die einen herkömmlichen sich vertikal drehenden Rotor (24) aufweist.

21. Verwendung der Windkraftanlage nach Anspruch 20, dadurch gekennzeichnet, daß eine Vielzahl von Windkraftanlagen (10) untereinander am Masten (25) befestigt werden.

22. Verwendung der Windkraftanlage nach Anspruch 20, dadurch gekennzeichnet, daß der Generator (19) der Windkraftanlage (10) mit einem bereits vorhanden Transformator (26) der bestehenden Windkraftanlage (23) verbunden wird.
